# EUROPEAN PATENT APPLICATION

(11) **EP 4 795 980 A1**
(43) Date of publication of application: **26.08.2026**
(21) Application number: 26159063.2
(22) Date of filing: 17.02.2026
(51) Int. Cl.: A47G 9/02, A47G 9/08, A41D 31/06, B32B 5/26, B32B 7/05

(54) **A CASING**

(30) Priority: 20.02.2025 GB 202502491
(71) Applicant: Equip Outdoor Technologies Limited, Derbyshire DE55 4LS (GB)
(72) Inventor: WILLIAMS, Rowan, Alfreton, DE55 4LS (GB); FISH, Tim, Alfreton, DE55 4LS (GB)
(74) Representative: Foot, Paul Matthew James

(57) **Abstract**

A casing (12) for receiving a loose insulating material, the casing comprising:
an inner shell (22) of flexible sheet material;
an outer shell (24) of flexible sheet material; and
a baffle arrangement (26) located between and connecting the inner and outer shells and comprising adjacent first and second elongate baffle members (28,30) of flexible sheet material laterally spaced along the inner and outer shells, the first and second baffle members, inner shell and outer shell defining one or more chamber for receiving the insulating material,
wherein the first baffle member and the second baffle member are connected to the outer shell along a respective baffle outer edge at an outer connection region (48) and to the inner shell along a respective baffle inner edge at an opposing inner connection region (40),
the opposing inner and outer connection regions of the first baffle member being non-linear and following an inverse path from one another.

## Description

### FIELD

The present teachings relate to a casing for receiving a loose insulating material, an insulated garment or sleeping article, and a method of forming a casing for receiving a loose insulting material.

### BACKGROUND

Typically, sleeping articles and thermally insulated garments, for example sleeping bags sleeping mats, and jackets, include a casing of flexible sheet material (typically a fabric material for sleeping bags and garments, or plastics sheet in the case of an inflatable sleeping mat) provided with baffles. The baffles define chambers which receive loose insulating material. The loose insulating material provides thermal insulation to the sleeping article or thermally insulated garment.

During use, the baffle may move or bend, for example when the body of the user exerts a force on the baffle. As the insulating material is loose, this may cause the insulating material to move from the desired location, for example towards either side of the baffle. The migration of the insulating material may create cold spots, which is detrimental to the thermal performance of the sleeping article or thermally insulated garment.

The present teachings seek to overcome or at least mitigate one or more problems associated with the prior art.

### SUMMARY

A first aspect of the present teachings provides a casing for receiving a loose insulating material. The casing may comprise:
an inner shell of flexible sheet material;
an outer shell of flexible sheet material; and
a baffle arrangement located between and connecting the inner and outer shells. The baffle arrangement may comprise adjacent first and second elongate baffle members of flexible sheet material laterally spaced along the inner and outer shells. The first and second baffle members, inner shell and outer shell may define one or more chambers for receiving the insulating material.

The first baffle member and the second baffle member may be connected to the outer shell along a respective baffle outer edge at an outer connection region and to the inner shell along a respective baffle inner edge at an opposing inner connection region.

The opposing inner and outer connection regions of the first baffle member may be non-linear and may follow an inverse path from one another.

Advantageously, the first baffle member having inner and outer connection regions which are non-linear and follow an inverse path from one another helps to inhibit the insulating material from migrating towards either side of the first baffle member, in use, and helps to spread the insulating material between the first and second baffle members. This helps to inhibit cold spots from forming at locations from which the insulating material has migrated, thereby improving the thermal performance of the casing.

Optionally, the opposing inner and outer connection regions of the second baffle member are non-linear and follow an inverse path from one another.

Advantageously, the second baffle member having inner and outer connection regions which are non-linear and follow an inverse path from one another helps to further inhibit insulating material migrating towards either side of the second baffle member (i.e. at an additional location to the first baffle member).

Optionally, the second baffle further follows an inverse path to the corresponding inner and outer connection regions of the first baffle member.

Advantageously, the first and second baffle members following inverse paths helps to create pinch points between the first and second baffle members. This helps to stop the insulating material from moving and migrating from the desired locations. For example, the insulating material may migrate towards either side of the first and second baffle members.

Optionally, the non-linear inner and/or outer connection region of the first baffle member comprises a deviation in profile in plan view.

Advantageously, the deviation in profile helps to create non-linear chambers for receiving the insulating material, which helps to inhibit insulating material from migrating to either side of the first baffle member.

Optionally, the deviation in profile of the first baffle member is a substantially zig-zagged deviation in profile in plan view.

Advantageously, the zig-zagged deviation in profile is simple to manufacture, thereby improving ease of manufacture of the casing and reducing costs.

Optionally, the deviation is profile of the first baffle member is a substantially curved, oscillating or sinusoidal deviation in profile in plan view.

Optionally, the non-linear inner and outer connection regions of the first baffle member intersect at least once in plan view. Optionally, the inner and outer connections regions of the first baffle member intersect at least twice in plan view.

Optionally, the first baffle member extends along a longitudinal axis thereof. Optionally, the first baffle member twists about said longitudinal axis to define the inverse path of the inner and outer connection regions.

Advantageously, twisting the first baffle member about the longitudinal axis creates non-linear chambers, which helps to inhibit insulating material from migrating to either side of the first baffle member. This is particularly advantageous, for example, when the casing is used for a thermally insulated sleeping article, as a human body may exert a bending force on the first baffle member. Providing a first baffle member which is twisted has a greater resistance to bending, thereby helping to keep the insulating material in the desired locations.

Optionally, the first baffle member twists about the longitudinal axis in a first rotational direction from a first end of the first baffle member towards a location intermediate the first and an opposing second end of the first baffle member, and in an opposing second rotational direction from the location intermediate the first and second end of the first baffle member towards the second end of the first baffle member to define the non-linear inner and outer connection regions, optionally to define substantially zig-zigged inner and outer connection regions.

Advantageously, twisting the first baffle member in opposing directions helps to create non-linear baffle chamber which are non-symmetrical about a lateral axis of the first baffle member. This helps to inhibit insulating material from migrating to either side of the first baffle member.

Optionally, the location intermediate the first and second end of the first baffle member is located equidistant the first and second ends of the first baffle member.

Advantageously, such an arrangement of the first baffle member improves ease of manufacture of the casing and helps to facilitate uniform distribution of insulating material along the longitudinal axis of the first baffle member.

Optionally, the first baffle member is formed from a fabric sheet material twisted to form the inner and outer connection regions.

Advantageously, fabric sheet material is flexible and adaptable, enabling the first and second baffle members to be shaped and assembled to the casing. Additionally, fabric sheet material may be relatively breathable, helping to inhibit the build-up of condensation.

Optionally, the first baffle member defines a width extending laterally between the inner and outer connection regions. Optionally, the width of the first baffle member along a longitudinal axis thereof decreases from a first end of the first baffle member in a direction towards an opposing second end of the first baffle member to define a first minimum width at a location between the first end and the second end, optionally closer to the first end than the second end, and/or wherein the width of the first baffle member along the longitudinal axis decreases from the second end of the first baffle member in a direction towards the opposing first end of the first baffle member to define a second minimum width at a location between the first end and the second end, optionally closer to the second end than the first end.

The width may be a lateral width of the first baffle member when the baffle member is viewed in plan view.

Advantageously, providing a first baffle member with a width which varies along the length helps to create non-linear baffle chambers, which helps to inhibit insulating material from migrating to either side of the first baffle member. This is particularly advantageous, for example, when the casing is used for a thermally insulated sleeping article, as a human body may exert a bending force on the first baffle member. Providing a first baffle member with a varying width has a greater resistance to bending, thereby helping to keep the insulating material in the desired locations.

Optionally, the width of the first baffle member along the longitudinal axis thereof increases from the first and/or second minimum width in a direction towards a centre point between the opposing first and second ends of the first baffle member. Optionally, a maximum width of the first baffle member is located at or towards the centre point.

Advantageously, providing a width which increases from the minimum width helps to increase a number of deviations of the chamber, thereby helping to create a funnel like structure which helps to inhibit insulating material from migrating to either side of the first baffle member.

Optionally, the inner and outer connection regions of the first baffle member are substantially symmetrical about a longitudinal axis of the first baffle member in plan view. In particular, the inner and outer connection regions of the first baffle member have mirror symmetry about the longitudinal axis of the first baffle member in plan view.

Advantageously, providing symmetrical inner and outer connections regions helps to improve ease of manufacture of the casing and helps to facilitate uniform distribution of insulating material about the longitudinal axis of the first baffle member.

Optionally, the first baffle member is substantially symmetrical about a longitudinal plane of symmetry extending parallel to the longitudinal axis of the first baffle member and between the inner and outer shells. In particular, the first baffle member has rotational symmetry about the longitudinal plane of symmetry.

Advantageously, providing a symmetrical first baffle member helps to improve ease of manufacture of the casing and helps to facilitate uniform distribution of insulating material about the plane of symmetry of the first baffle member.

Optionally, the first baffle member defines a lateral axis extending perpendicular to a longitudinal axis of the first baffle member between the inner and outer connection regions. Optionally, the inner and outer connection regions are each substantially symmetrical about said lateral axis in plan view. In particular, the inner and outer connection regions of the first baffle member may have mirror symmetry about the lateral axis of the first baffle member in plan view.

Advantageously, providing symmetrical inner and outer connections regions helps to improve ease of manufacture of the casing and helps to facilitate uniform distribution of insulating material about the lateral axis of the first baffle member.

Optionally, the first baffle member is substantially symmetrical about a lateral plane of symmetry extending parallel to the lateral axis of the first baffle member and between the inner and outer shells. In particular, the first baffle member has rotational symmetry about the lateral plane of symmetry.

Advantageously, providing a symmetrical first baffle member helps to improve ease of manufacture of the casing and helps to facilitate uniform distribution of insulating material about the lateral plane of symmetry of the first baffle member.

Optionally, a maximum width of the first baffle member along a lateral axis of the first baffle member extending between the inner and outer connection regions is in the range 30mm to 140mm, optionally in the range 40mm to 120mm, optionally in the range 60mm to 100mm, for example approximately 80mm.

Advantageously, maximum widths within these ranges have been found to improve structural stability by providing better support and shape retention. This helps to maintain the intended form of the casing over time.

Optionally, a height of the first baffle member along a transverse axis of the first baffle member is in the range 1cm to 10cm, optionally in the range 2cm to 5cm.

Advantageously, heights within these ranges have been found to improve thermal retention by enhancing loft of insulating material between the inner and outer shells. In addition, thermal insulation may be better distributed, thereby improving the thermal performance of the casing.

Optionally, the baffle arrangement comprises a plurality of first and second baffle members arranged in pairs of first and second baffle members. Optionally, the first and second baffle members in each pair are substantially symmetrical about a plane of symmetry extending parallel to a longitudinal axis of each baffle member.

Advantageously, providing pairs of symmetrical baffle members following inverse paths helps to create pinch points between the first and second baffle members. This helps to inhibit the insulating material from moving and migrating from the desired locations. For example, the insulating material may migrate towards either side of the first and second baffle members.

Optionally, the baffle arrangement comprises a repeating pattern of pairs of first and second baffle members laterally spaced apart from one another.

Advantageously, providing a repeating pattern of pairs of first and second baffle members helps to improve distribution of insulating material, and therefore the thermal performance of the casing.

Optionally, the baffle arrangement comprises a baffle end wall closing at least one side of the casing. Optionally, each of the first and second baffle members is connected to the baffle end wall at a first and/or second end thereof.

Optionally, the first and/or second ends of the first baffle member connected to the baffle end wall are angled with respect to a transverse axis of the first baffle member extending perpendicularly between the inner and outer shells.

Optionally, the inner connection region and the outer connection region are inner and outer seams connecting the inner and outer shells to the baffle inner and outer edges of first and/or second baffle member.

Advantageously, a seam secures the first and second baffle members in place relative to the inner and outer shells, which helps to maintain the intended shape of the first and second baffle members.

Optionally, the inner and outer seams are stitched seams connecting the inner and outer shells to the baffle inner and outer edges of the first and/or second baffle member.

Advantageously, a stitched seam helps to improve ease of manufacture of the casing.

According to a further aspect of the present teachings there is provided an insulated garment or sleeping article formed from the casing of a previous aspect, comprising:
an insulating material located between the inner and outer shells, wherein the insulating material is received in one or more chamber defined by the first and second baffles members.

Advantageously, the first baffle member having inner and outer connection regions which are non-linear and follow an inverse path from one another helps to inhibit loose fill insulating material from migrating towards either side of the first baffle member, in use, and helps to spread the insulating material between the first and second baffle member. This helps to inhibit cold spots from forming at locations from which the insulating material has migrated, thereby improving the thermal performance of the casing.

Optionally, the insulating material comprises down and/or a synthetic fibre.

Advantageously, down and synthetic fibre provide effective thermal insulation by trapping air, which helps to improve the thermal performance of the garment or sleeping article.

Optionally, the casing comprises an upper wall and a lower wall when the garment or sleeping article is laid out substantially parallel to a ground surface. Optionally, the upper and lower wall each comprise a baffle arrangement connected between the inner and outer shells.

Advantageously, providing a baffle arrangement in the upper and lower walls helps to provide uniform thermal distribution around a human body located therebetween.

Optionally, the baffle arrangements of the upper wall and the lower wall are of substantially the same construction.

Advantageously, baffle arrangements of substantially the same configuration are simpler to manufacture, and help to create uniform thermal distribution through the upper and lower wall.

According to a further aspect of the present teachings, there is provided a method of forming a casing for receiving a loose insulating material, the method comprising:
providing an inner shell and an outer shell of flexible sheet material;
providing a baffle arrangement comprising first and second baffle members of flexible sheet material;
connecting an outer baffle edge of the first baffle member to the outer shell at an outer connection region, said outer connection region being non-linear;
connecting an inner baffle edge of the first baffle member to the inner shell at an inner connection region, said inner connection region being non-linear and following an inverse path from the outer connection region; and
connecting an outer baffle edge of the second baffle member to the outer shell at an outer connection region and connecting an inner baffle edge of the second baffle member to the inner shell at an inner connection region such that a chamber is defined between the first and second baffle members, inner shell and outer shell for receiving the loose insulating material.

Advantageously, the first baffle member having inner and outer connection regions which are non-linear and follow an inverse path from one another helps to inhibit the insulating material from migrating towards either side of the first baffle member, in use, and helps to spread the insulating material between the first and second baffle members. This helps to inhibit cold spots from forming at locations from which the insulating material has migrated, thereby improving the thermal performance of the casing.

### BRIEF DESCRIPTION OF THE DRAWINGS

Embodiments will now be described with reference to the accompanying drawings, in which:
Figure 1 is a plan view of a portion of an insulated sleeping article of an embodiment of the present teachings;
Figure 2 is a perspective view of a baffle arrangement of the insulated sleeping article of Figure 1 according to an embodiment of the present teachings;
Figure 3 is a perspective views of a baffle arrangement of the insulated sleeping article of Figure 1 according to an embodiment of the present teachings;
Figures 4A to 4C show isometric cross-section views of the baffle arrangement of Figure 2.

### DETAILED DESCRIPTION OF THE DRAWINGS

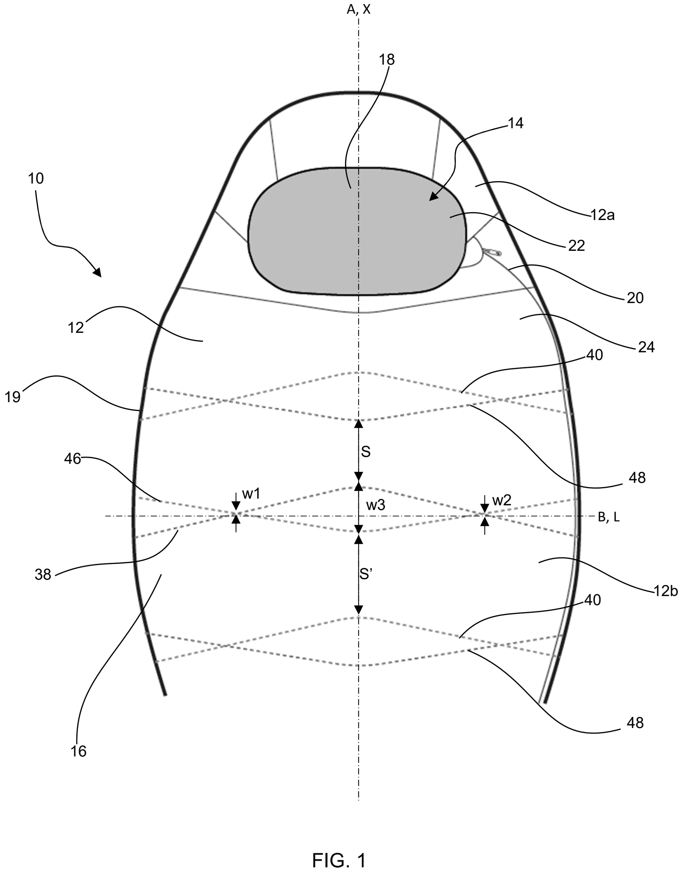

Referring now to Figure 1, an insulated sleeping article is indicated generally at 10. In the embodiment of Figure 1, the insulated sleeping article 10 is a sleeping bag 10. The insulated sleeping article 10 is formed from a casing 12. The casing 12 includes an opening 14 extending into an interior volume, and the casing 12 surrounds the interior volume 16 in an enclosed tubular fashion, such that a body of a user may be received in the interior volume 16. It shall be appreciated that Figure 1 show the sleeping bag 10 in use, i.e. when the sleeping bag 10 is laid out parallel to a ground surface.

The casing 12 includes a head portion 12a and a body portion 12b. The opening 14 is located on the head portion 12a. In use, the head portion 12a is intended to receive a head and neck of the user, and the body portion 12b is intended to receive at least part of a torso and legs of the user.

As illustrated in Figure 1, the casing 12 defines an elongate length extending along a longitudinal axis A thereof. The elongate length of the casing 12 may be in the range 1800mm to 2300mm. The casing 12 defines a width extending along a lateral axis B of the casing 12 and extending perpendicular to the elongate length. The width may be in the range 700mm to 1000mm. The casing 12 defines a thickness extending along a transverse axis perpendicular to the elongate length and width. The thickness may be in the range 20mm to 300mm.

The casing 12 includes an upper wall 16 and a lower wall 18. The terms "upper" and "lower" refer to the location of the walls 16, 18 when the insulated sleeping article 10 is laid out substantially parallel to the ground surface, in use. As such, the lower wall 18 is located below the user when the sleeping article 10 is in use and the upper wall 16 is located above the user when the sleeping article 10 is in use. The opening 14 is located on the upper wall 16. The upper wall 16 and the lower wall 18 are connected at a perimeter edge 19 of the casing 12.

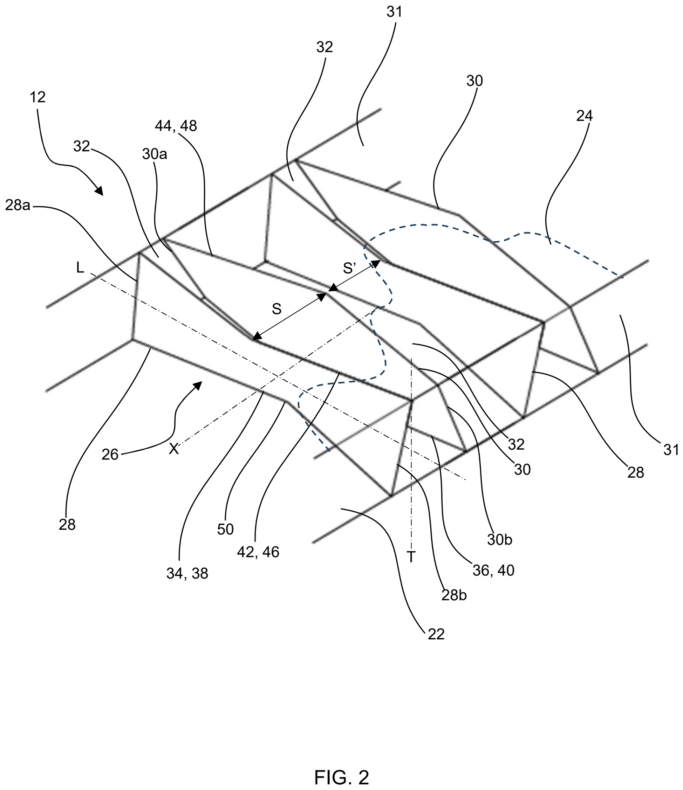

A closure arrangement 20, for example a zip arrangement 20, is provided along a portion of the perimeter edge 19 of the casing 12 in this embodiment. The zip arrangement 20 is used to partially open and close the casing 12 to provide access to the interior volume. The closure arrangement 20 may extend along a side of the casing 12. In the embodiment shown in Figure 2, the closure arrangement 12 extends from the opening 14 along an elongate side of the casing 12 (i.e. along the elongate length of the casing 12). In alternative embodiments, any suitable closure arrangement 20 may be provided extending along any portion of the casing 12.

The casing 12 is for receiving a loose insulating material (not shown). The term "loose" is taken to mean that the insulating material is not directly connected or fixed to the casing 12 and is formed from discrete particles that may move relative to each other. The insulating material helps to provide insulation to the sleeping article 10, thereby improving the thermal performance of the sleeping article 10. The insulating material may include natural down (plumage from geese or ducks) and/or a synthetic fibre, such as PrimaLoft^{®} supplied by PrimaLoft, Inc of Latham, NY, USA. Down and synthetic fibres provide effective thermal insulation by trapping air, which helps to improve the thermal performance of the casing 12. It shall be appreciated that in alternative embodiments, any suitable insulating material, or any combination of insulating materials, may be used.

Referring to Figures 1 and 2, the casing 12 includes an inner shell of flexible material 22 (also referred to as an inner shell 22), an outer shell of flexible material 24 (also referred to as an outer shell 24) and a baffle arrangement 26 located between and connecting the inner and outer shells 22, 24. The term "inner" is taken to mean the shell which is located closer to the interior volume. The term "outer" is taken to mean the shell which is located furthest from the interior volume. As such, the outer shell 24 surrounds the inner shell 22. The flexible sheet material of the inner and outer shells 22, 24 may be a fabric sheet material, for example a polyamide-based fabric, such as a proprietary fabric offered under the Pertex^{®} Quantum^{®} brand of MN Inter-Fashion Ltd. of Tokyo, Japan. It shall be appreciated that in alternative embodiments, any suitable flexible sheet material, or two or more layers of flexible sheet material, may be used to form one or both of the inner and outer shells 22, 24.

In the embodiment shown in Figures 1 and 2, the inner and outer shells 22, 24 each include a portion defining the upper and lower walls 16, 18. As such, the inner and outer shells 22, 24 are connected at the perimeter edge 19 thereof to define the upper and lower walls 16, 18. It shall be appreciated that the inner and outer shells 22, 24 may be formed as a continuous loop of fabric connected at the perimeter edge 19 thereof, or the inner and outer shells 22, 24 may be formed from a plurality of fabric sections connected together to form the inner and outer shells 22, 24.

Each of the upper and lower walls 16, 18 includes the baffle arrangement 26 connected between the inner and outer shells 22, 24. The baffle arrangement 26 helps to prevent insulating material from shifting and helps to improve loft of the casing 12, thereby improving the thermal performance of the insulated sleeping article 10. The baffle arrangement 26 of the upper and lower wall 16, 18 are of substantially the same construction. It shall be appreciated that in alternative embodiments, the first and second baffle members 28, 30 may extend continuously around the casing 12 (i.e. continuously around the inner and outer shells 22, 24).

The baffle arrangement 26 is illustrated in detail in Figure 2. The baffle arrangement 26 includes adjacent first and second elongate baffle members 28, 30 of flexible sheet material laterally spaced along the inner and outer shells 22, 24. In the embodiment shown in Figure 2, the first and second baffle members 28, 30 are formed from a flexible fabric sheet material, for example nylon, polyester, and/or a fabric mesh. It shall be appreciated that in alternative embodiments, any suitable flexible sheet material may be used to form the first and second baffle members 28, 30. Fabric sheet material is flexible and adaptable, enabling the first and second baffle member 28, 30 to be shaped and assembled to the casing 12. Additionally, the fabric sheet material may be relatively breathable, helping to inhibit the build-up of condensation. Depending upon application, the fabric sheet material may also have other features, such as wind and/or water resistance, metallised heat reflective coatings, for example.

The first and second baffle members 28, 30, inner shell 22 and outer shell 24 define one or more chambers 32 for receiving the insulating material. In the embodiment shown in Figure 2, a plurality of first and second baffle members 28, 30 are provided. As such, a plurality of chambers 32 are defined between the plurality of first and second baffle members 28, 30. The chambers 32 extend along the lateral axis B of the casing 12, between opposing sides. In the embodiment shown in Figure 1, the first and second baffle members 28, 30 are located on the body portion 12b of the casing 12, however the first and second baffle members 28, 30 may be provided at any suitable location of the casing 12.

The first and second baffle members 28, 30 define sidewalls of the chamber 32. The inner and outer shells 22, 24 define inner and outer, or upper and lower, walls of the chamber 32. The baffle arrangement 26 includes a baffle end wall 31 closing at least one side of the casing 12. Each of the first and second baffle members 28, 30 is connected to the baffle end wall 31 at opposing first and second ends 28a, 30a, 28b, 30b thereof, as illustrated in Figure 2. As such, each of the first and second baffle members 28, 30 extend between opposing sides of the baffle end wall 31.

The baffle end wall 31 also forms the one or more chambers 32. As such, each chamber 32 is enclosed by the first and second baffle members 28, 30, inner shell 22, outer shell 24 and baffle end wall 31. In the embodiment of Figure 2, the baffle end wall 31 extends around an entirety of the perimeter of the casing 12. In some alternative embodiments, the baffle end wall 31 may extend partially around the perimeter of the casing 12. By way of example, the baffle end wall 31 may only extend over the first and second ends 28a, 30a, 28b, 30b of the first and second baffle members 28, 30 (i.e. to enclose the ends of the chambers 32). It shall be appreciated that the baffle end wall 31 may be a continuous baffle end wall 31, or may be formed from a plurality of baffle end wall portions connected continuously or discontinuously. It shall be appreciated that the baffle end walls 31 may be substantially planar, substantially concave or substantially convex. As the baffle sidewalls 31 are formed from a flexible sheet material, the baffle end walls 31 may move or deform, in use.

The first and second baffle members 28, 30 each define an elongate length extending along a longitudinal axis L thereof, a width extending along a lateral axis X thereof and a height extending along a transverse axis T thereof. It shall be appreciated that the longitudinal axis L, lateral axis X and transverse axis T of the first and second baffle members 28, 30 are substantially perpendicular to one another. The longitudinal axis L, lateral axis X and transverse axis T are labelled in Figure 2 in relation to first baffle member 28, however it shall be appreciated that each of the first and second baffle members 28, 30 define said axes.

The length of the first and/or second baffle member 28, 30 may correspond to a width of the casing 12. As such, it shall be appreciated that the length of the first and/or second baffle members 28, 30 may vary as the width of the casing 12 varies (i.e. the baffle members may have differing widths from one another). A maximum width of the first and/or second baffle member 28, 30 may be in the range 30mm to 140mm, optionally in the range 40mm to 120mm, optionally in the range 60mm to 100mm, for example approximately 80mm. The height of the first and/or second baffle member 28, 30 may be in the range 10mm to 80mm, optionally in the range 20mm to 50mm.

The longitudinal axes L of the first and second baffle members 28, 30 are substantially parallel to one another and substantially parallel to the lateral axis B of the casing 12. The lateral axes X of the first and second baffle members 28, 30 are substantially parallel to one another and substantially parallel to the longitudinal axis A of the casing 12. As such, "laterally spaced along the inner and outer shells 22, 24" is taken to mean that the first and second baffle members 28, 30 are spaced apart along the lateral axis X of the first and second baffle members 28, 30. In the embodiment shown in Figure 2, the first and second baffle members 28, 30 are also spaced along the longitudinal axis A of the casing 12. The transverse axes T of the first and second baffle members 28, 30 are substantially parallel to one another and substantially parallel to the transverse axis of the casing 12.

It shall be appreciated that in alternative embodiments, the longitudinal axes L of the first and second baffle members 28, 30 may extend parallel to or diagonally with respect to the longitudinal axis A of the casing 12, may define a chevron shape, may be a combination of the described shapes, or may extend at any suitable angle. It shall be appreciated that in further alternative embodiments, the first and second baffle members 28, 30 may not be substantially parallel.

The plurality of first and second baffle members 28, 30 are arranged in pairs of first and second baffle members 28, 30 laterally spaced apart from one another. Two pairs of first and second baffle member 28, 30 are illustrated in Figure 2. It shall be appreciated that any suitable number of pairs of first and second baffle member 28, 30 may be provided. By way of example, a total number of first and second baffles 28, 30 may be in the range 5 to 30, optionally in the range 8 to 20, for example in the range 10 to 18. The casing 12 in Figure 1 may include a total of 12 first and second baffle members 28, 30, or a total of 18 first and second baffle members 28, 30, however in alternative embodiments any suitable number of first and second baffle members 28, 30 may be provided. The number of first and second baffle members 28, 30 may depend on the length of the casing 12. For example, a casing 12 of greater length may have a greater number of first and second baffle members 28, 30 than a casing 12 of shorter length.

In the embodiment shown in Figure 2, the pairs of first and second baffle member 28, 30 are a repeating pattern of pairs of first and second baffle members 28, 30. In particular, each pair of first and second baffle members 28, 30 are substantially symmetrical about a plane of symmetry extending parallel to the longitudinal axes L of the first and second baffle members 28, 30.

As illustrated in Figure 2, a first lateral spacing S is defined between the first and second baffle members 28, 30 in each pair. A second lateral spacing S' is defined between adjacent pairs of first and second baffle members 28, 30. The variation of the first and second lateral spacings S, S' will be described in more detail below.

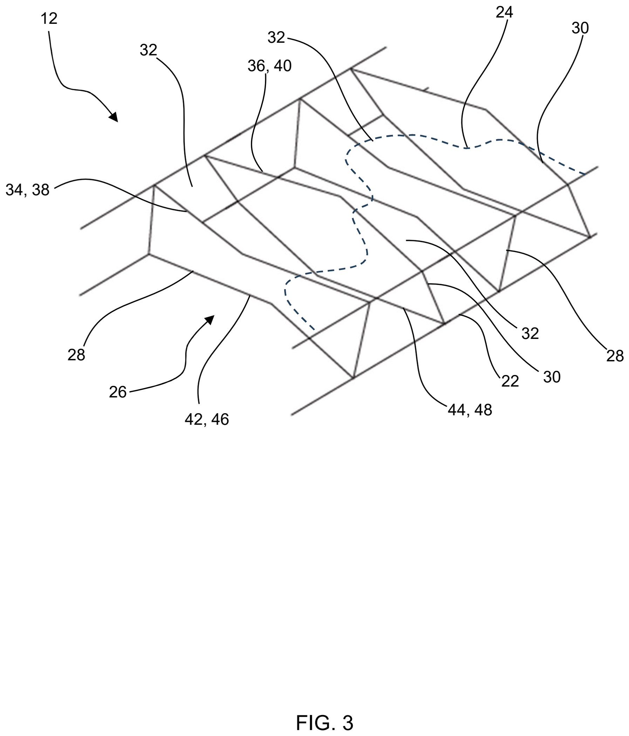

Figure 3 shows an alternative arrangement of first and second baffle members 28, 30 with alternative first and second lateral spacings S, S'. As such, Figure 3 illustrates that the first and second lateral spacings S, S' may vary in alternative embodiments of the baffle arrangement 26. It shall be appreciated that the teachings described hereafter in relation to Figure 2 are also relevant to Figure 3.

The first baffle member 28 and the second baffle member 30 are connected to the outer shell 24 along a respective baffle outer edge 42, 44 at an outer connection region 46, 48. The first baffle member 28 and the second baffle member 30 are connected to the inner shell 22 along a respective baffle inner edge 34, 36 at an opposing inner connection region 38, 40. The baffle inner and outer edges 34, 36, 42, 44 are elongate edges of the first and second baffle member 28, 30. The baffle inner and outer edges 34, 36, 42, 44 extend along the longitudinal axes L of the respective first and second baffle members 28, 30.

The opposing inner and outer connection regions 38, 46 of the first baffle member 28 are non-linear and follow an inverse path from one another. "Non-linear" is taken to mean that the inner and outer connection regions 38, 46 do not extend in a single straight line along the elongate length of the first baffle member 28. An "inverse path" is taken to mean that the path of the inner connection region 38 is out of phase from the path of the outer connection region 46 along the elongate length of the first baffle member 28 when the casing 12 is viewed in plan view, as illustrated in Figure 1. In some embodiments, the path may be out of phase but not mirror images. For example, the inner connection region may have a zig-zag path and the outer connection region may have a wavy path which are out of phase (or vice-versa).

The first baffle member 28 having inner and outer connection regions 38, 46 which are non-linear and follow an inverse path from one another helps to inhibit insulating material from migrating towards either side of the first baffle member 28, in use, and helps to spread the insulating material between the first and second baffle members 28, 30. This helps to inhibit cold spots from forming at locations from which the insulating material has migrated, thereby improving the thermal performance of the sleeping article 10.

The inner and outer connection regions 38, 40, 46, 48 are inner and outer seams connecting the inner and outer shells 22, 24 to the baffle inner and outer edges 34, 36, 42, 44 of the first and second baffle members 28, 30. In the embodiment shown in Figures 1 and 2, the inner and outer connection regions 38, 40, 46, 48 are lines. The inner and outer seams are stitched seams connecting the inner and outer shells 22, 24 to the baffle inner and outer edges 34, 36, 42, 44 of the first and/or second baffle member 28, 30. Providing a stitched seam helps to improve ease of manufacture of the casing 12. In alternative embodiments, the inner and outer connection regions 38, 40, 46, 48 may be an adhesive region, a welded region, a mechanically fastened region or the like.

In the embodiment shown in Figure 2, the opposing inner and outer connection regions 40, 48 of the second baffle member 30 are non-linear and follow an inverse path from one another. This arrangement helps to further inhibit insulating material migrating towards either side of the second baffle member 30 (i.e. at an additional location to the first baffle member 28). It shall be appreciated that in alternative embodiments, the second baffle member 30 may have substantially linear inner and outer connection regions 40, 48 which may not follow an inverse path from one another. As such, the first baffle members 28 may be non-linear and inverse, and the second baffle members 30 may be linear.

The second baffle member 30 further follows an inverse path to the corresponding inner and outer connection regions 38, 46 of the first baffle member 28. In particular, in the embodiment shown in Figure 2, the first and second baffle members 28, 30 are substantially symmetrical about a plane of symmetry extending therebetween. The plane of symmetry is substantially parallel to the longitudinal axes L of the first and second baffle members 28, 30. As such, the inner connection region 38 of the first baffle member 28 is of substantially the same shape and orientation as the outer connection region 48 of the second baffle member 30. Put another way, the inner connection region 38 of the first baffle member 28 follows a substantially parallel path to the outer connection region 48 of the second baffle member 30. The outer connection region 46 of the first baffle member 28 is of substantially the same shape and orientation as the inner connection region 40 of the second baffle member 30. Put another way, the outer connection region 46 of the first baffle member 28 follows a substantially parallel path to the inner connection region 40 of the second baffle member 30.

It shall be appreciated that in alternative embodiments, the inner and outer connection regions 40, 48 of the second baffle member 30 may not follow an inverse path to the corresponding inner and outer connection regions 38, 46 of the first baffle member 28. By way of example, the second baffle member 30 may be a substantially planar second baffle member 30 or may be any alternative shape of second baffle member 30. In some embodiments, the second baffle member 30 may still have non-linear inner and outer connections regions 38, 46, but the inner and outer connections regions 38, 46 may not be offset from one another.

As illustrated in Figure 2, the first and second ends 28a, 30a, 28b, 30b of the first and second baffle members 28, 30 connected to the baffle end wall 31 are angled with respect to the transverse axes T of the first and second baffle members 28, 30. The connection between the first and second ends and the baffle end wall 31 is substantially linear (i.e. a diagonally arranged straight line). It shall be appreciated that in alternative embodiments, the first and second ends 28a, 30a, 28b, 30b of the first and second baffle members 28, 30 may extend substantially parallel to the transverse axis T.

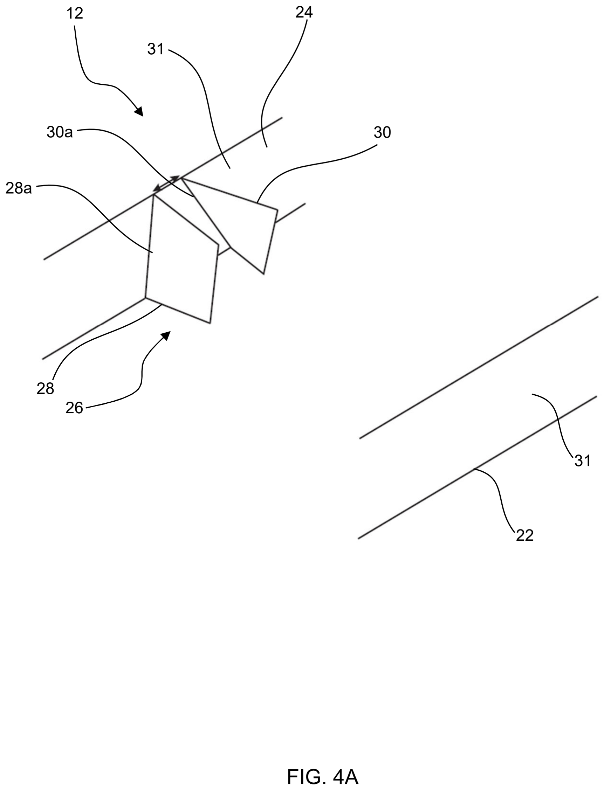

The shape of the first baffle member 28 will be described in detail hereafter, in particular with reference to Figures 2 and 4A to 4C. It shall be appreciated that the teachings described in relation to the first baffle member 28 are also applicable to the second baffle member 30, for example in embodiments where the second baffle member 30 has non-linear inner and outer connection regions 40, 48 and/or inner and outer connection regions 40, 48 which follow an inverse path from one another. It shall be appreciated that in embodiments where the first and second baffle members 28, 30 are substantially symmetrical, the directions, orientations and configurations may be a mirror image when applied to the second baffle member 30.

The non-linear inner and outer connection regions 38, 46 of the first baffle member 28 include a deviation in profile in plan view, as illustrated in Figure 1. The deviation in profile helps to create non-linear chambers 32 for receiving insulating material, which helps to inhibit insulating material from migrating to either side of the first baffle member 28. In the embodiment shown in Figures 1 and 2, the deviation in profile of the first baffle member 28 is a substantially zig-zagged deviation in profile in plan view. The zig-zagged deviation in profile is simple to manufacture, thereby improving ease of manufacture of the casing 12 and reducing costs.

As illustrated in Figure 1, the inner connection region 38 extends from the perimeter 19 of the casing 12 at angle with respect to the lateral axis B of the casing 12. The inner connection region 38 extends from the perimeter 19 diagonally (i.e. in a straight diagonal line) to form a section of the zig-zagged deviation in profile. The inner connection region 38 changes angle and extends at said angle towards an opposing side of the perimeter 19 of the casing 12 to define the zig-zagged deviation in profile. In the embodiment shown in Figure 1, the change of angle occurs at a centre 50 of the first baffle member 28. The inner connection region 38 extends diagonally towards the opposing side of the perimeter 19 (i.e. in a straight diagonal line). As such, the "non-linear" inner connection region 38 may be formed from a plurality of straight or "linear" sections which are angled with respect to one another.

In the embodiment of Figures 1 and 2, the inner and outer connection regions 38, 46 of the first baffle member 28 are substantially symmetrical about the longitudinal axis L of the first baffle member 28 in plan view. In particular, the inner and outer connection regions 38, 46 of the first baffle member 28 have mirror symmetry about the longitudinal axis L of the first baffle member 28 in plan view. Providing symmetrical inner and outer connections regions 38, 46 helps to improve ease of manufacture of the casing 12 and helps to facilitate uniform distribution of insulating material about the longitudinal axis L of the first baffle member 28. In particular, the first baffle member 28 is substantially symmetrical about a longitudinal plane of symmetry extending parallel to the longitudinal axis of the first baffle member 28 between the inner and outer shells 22, 24. In particular, the first baffle member 28 has rotational symmetry about the longitudinal plane of symmetry.

The inner and outer connection regions 38, 46 are substantially symmetrical about the lateral axis X of the first baffle member 28 in plan view. In particular, the inner and outer connection regions 36, 46 of the first baffle member 28 have mirror symmetry about the lateral axis X of the first baffle member 28 in plan view. The first baffle member 28 is substantially symmetrical about a lateral plane of symmetry extending parallel to the lateral axis X of the first baffle member 28 and between the inner and outer shells 22, 24. In particular, the first baffle member 28 has rotational symmetry about the lateral plane of symmetry.

It shall be appreciated that in alterative embodiment, the inner and outer connection regions 38, 46 and the first baffle member 28 may be not be symmetrical, or may be symmetrical about only one of the lateral/longitudinal plane.

The non-linear inner and outer connection regions 38, 46 of the first baffle member 28 intersect at least once in plan view, optionally at least twice in plan view. In the embodiment illustrated in Figure 1, the inner and outer connections regions 38, 46 intersect twice in plan view. In alternative embodiments, the inner and outer connections regions 38, 46 may intersect once in plan view, three or more times in plan view, or may not intersect in plan view.

It shall be appreciated that in alternative embodiments, the deviation in profile of the first baffle member 28 may be a substantially curved, oscillating or sinusoidal deviation in profile in plan view. By way of the example, the inner and outer connection regions 38, 46 may be a wave, a C-shape, an arc of a circle or the like.

Figures 4A to 4C illustrate the shape of the first baffle member 38 along the longitudinal axis L via a series of cross-sections. It shall be appreciated that the first baffle member 28 is non-planar. As such, the chamber 32 has at least one non-planar wall. The first baffle member 28 extends along the longitudinal axis L thereof and twists about said longitudinal axis to define the inverse path of the inner and outer connection regions 38, 46. The fabric sheet material from which the first baffle member 28 is formed is twisted to form the inner and outer connection regions 38, 46.

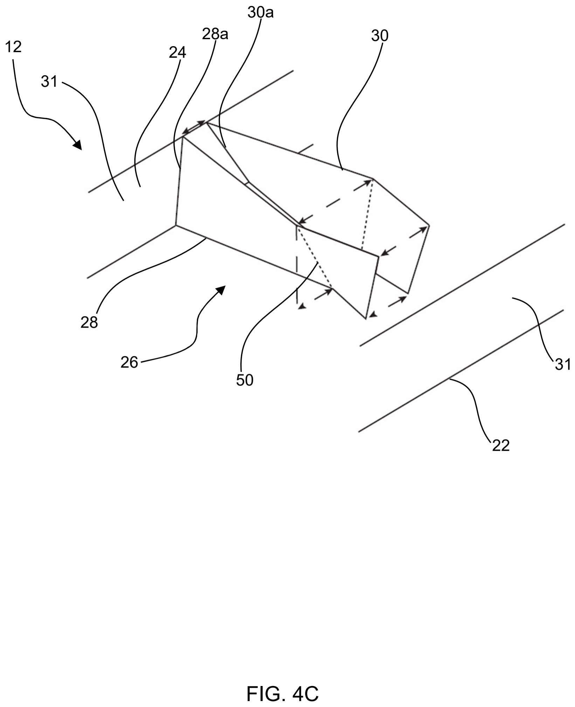

The first baffle member 28 twists about the longitudinal axis L in a first rotational direction from a first end 28a of the first baffle member 28 towards a location 50 intermediate the first and an opposing second end 28a, 28b of the first baffle member 28. In the embodiment shown in Figures 4A to 4C, the first rotational direction is clockwise, however the first rotational direction may be anti-clockwise. Figure 4A illustrates the twisting of the first baffle member 28 from the first end 28a in the first rotational direction. In Figure 4C, the cross-section is taken one third of the elongate length of the first baffle member 28 from the first end 28a of the first baffle member 28 (i.e. one third of the first baffle member 28 is shown).

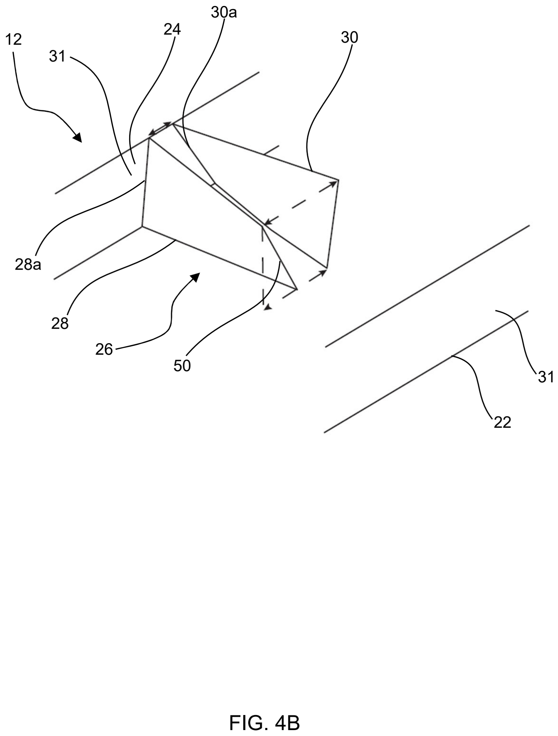

Figure 4B illustrates the twisting of the first baffle member 28 up to the location 50 intermediate the first and second opposing end 28a, 28b. In Figure 4B, the cross-section is taken half of the elongate length of the first baffle member 28 from the first end 28a (i.e. half the first baffle member 28 is shown). As such, in the embodiment shown in Figures 4A to 4C, the location 50 intermediate the first and second ends 28a, 28b is located equidistant the first and second ends 28a, 28b of the first baffle member 28 (i.e. at a central point 50 between the first and second ends 28b). The cross-sectional view of Figure 4B is taken at the central point 50.

As illustrated in Figure 4C, the first baffle member 28 twists about the longitudinal axis L in an opposing second rotational direction from the location 50 intermediate the first and second end 28a, 28b of the first baffle member 28 towards the second end 28b of the first baffle member 28. In Figure 4C, the cross-section is taken two thirds of the elongate length of the first baffle member 28 from the first end 28a (i.e. two thirds of the first baffle member 28 is shown). The twisting of the first baffle member 28 in the first and second rotational directions defines the non-linear inner and outer connection regions 38, 46, for example the zig-zagged inner and outer connection regions 38, 46. In the embodiment shown in Figure 4A, the second rotational direction is anticlockwise, however in alternative embodiments the second rotational direction may be clockwise.

The first baffle member 28 twists about the longitudinal axis in the first rotational direction an angle in the range 20° to 60°. The first baffle member 28 twists about the longitudinal axis in the second rotational direction an angle in the range 20° to 60°. It shall be appreciated that in alternative embodiments, any suitable angle may be provided. In the embodiment shown in the Figures, the first baffle member 28 twists about the same angle in the first and second rotational directions such that the first end 28a and the second end 28b extend at substantially the same angle with respect to the transverse axis T of the first baffle member 28a. Put another way, the first and second ends 28a, 28b of the first baffle member 28 extend parallel to one another. It shall be appreciated that in alternative embodiments, the angles of the first and second ends 28a, 28b may differ.

It shall be appreciated that in alternative embodiments, the first baffle member 28 may twist about the longitudinal axis L from the first end 28a to the second only 28b only in the first or only in the second rotational direction. By way of example, in some embodiments, the portion of the first baffle member 28 extending between the centre 50 and the second end 28b may be omitted (i.e. the centre 50 may be the second end 28b in such embodiments).

In further alternative embodiments, the first baffle member 28 may extend further from the second end 28b in the first rotational direction. It shall be appreciated that the first baffle member 28 may include any suitable number of sections rotating sequentially in the first and second rotational direction.

As described above, the first baffle member 28 defines the width along the lateral axis X of the first baffle member 28. The width of the first baffle member 28 extends laterally between the inner and outer connection regions 38, 46. As such, it shall be appreciated that the width is a lateral width of the first baffle member 28 when the baffle member 28 is viewed as a projection in plan view, as illustrated in Figure 1.

The width of the first baffle member 28 varies along the longitudinal axis L thereof. It shall be appreciated that in embodiments where the inner and outer connection regions 38, 46 are substantially zig-zagged, the variations in width are substantially linear. The width of the first baffle member 28 along the longitudinal axis L thereof decreases from a first end 28a of the first baffle member 28 in a direction towards the opposing second end 28b of the first baffle member 28 to define a first minimum width w1 at a location between the first end 28a and the second end 28b. In the embodiment shown in Figures 1 and 2, the first minimum width w1 is located closer to the first end 28a than the second end 28b. In particular, the first minimum width w1 may be located at or towards a centre point between the centre 50 of the first baffle member 52 and the first end 28a (i.e. at or near a quarter of a distance between the first and second ends 28a, 28b of the first baffle member 28), as illustrated in Figure 1.

The width of the first baffle member 28 along the longitudinal axis L thereof decreases from the second end 28b of the first baffle member 28 in a direction towards the opposing first end 28a of the first baffle member 28 to define a second minimum width w2 at a location between the first end 28a and the second end 28b. In the embodiment shown in Figures 1 and 2, the second minimum width w2 is located closer to the second end 28b than the first end 28a. In particular, the second minimum width w2 may be located at or towards a centre point between the centre 50 of the first baffle member 52 and the second end 28b (i.e. at or near a quarter of a distance between the first and second ends 28a, 28b of the first baffle member 28), as illustrated in Figure 1.

As illustrated in Figure 1, the width of the first baffle member 28 along the longitudinal axis L thereof increases from the first and/or second minimum width w1, w2 in a direction towards the centre point 50 between the opposing first and second ends 28a, 28b of the first baffle member 28. The maximum width w3 of the first baffle member 28 is located at or towards the centre 50. In the embodiment shown in Figure 1, as the first baffle member 28 is substantially symmetrical about the lateral axis X thereof, the first minimum width w1 and the second minimum width w2 are located equidistant from the centre 50 of the first baffle member 50 (and therefore equidistant from the maximum width w3). In alternative embodiments, the first and second minimum widths w1, w2 may be located different distances from the centre 50, and/or the maximum width may not be located at the centre 50.

The first and second minimum widths w1, w2 of the first baffle member 28 correspond to the points of intersection of the inner and outer connection regions 38, 46. As such, the number of minimum widths w1, w2 corresponds to the number of points of intersection between the inner and outer connection regions 38, 46.

The width of the second baffle member 30 varies in substantially the same way as the first baffle member 28. The minimum and maximum widths w1, w2, w3 of the first and second baffle members 28, 30 are longitudinally aligned along the elongate lengths of the first and second baffle members 28, 30. In the embodiment of the Figures, the minimum and maximum widths w1, w2, w3 of the first and second baffle members 28, 30 are substantially the same, however in alternative embodiments the minimum and maximum width w1, w2, w2 may vary between the first and second baffle members 28, 30.

It shall be appreciated that the varying width of first and second baffle members 28, 30, defines the variation in the first and second lateral spacings S, S' along the longitudinal axes L of the first and second baffle members 28, 30. In the embodiment shown in Figure 1, a minimum first lateral spacing S between the first baffle member 28 and the second baffle member 30 in a pair of first and second baffle members 28, 30 is defined at the locations of maximum width w3 of the first and second baffle members 28, 30. The minimum first lateral spacing S may be in the range 30mm to 200mm, optionally in the range 80mm to 160mm. A maximum first lateral spacing S between the first baffle member 28 and the second baffle member 30 in a pair of first and second baffle members 28, 30 is defined at the locations of minimum width w1, w2 of the first and second baffle members 28, 30. The maximum first lateral spacing S may be in the range 30mm to 200mm, optionally in the range 80mm to 160mm.

A minimum second lateral spacing S' between the first baffle member 28 of a pair of first and second baffle members 28, 30 and an adjacent second baffle member 30 of an adjacent pair of first and second baffle members 28, 30 is defined at the locations of maximum width w3 of the first and second baffle members 28, 30. The minimum second lateral spacing S' may be in the range 30mm to 200mm, optionally in the range 80mm to 160mm. A maximum second lateral spacing S' between the first baffle member 28 of a pair of first and second baffle members 28, 30 and an adjacent second baffle member 30 of an adjacent pair of first and second baffle members 28, 30 is defined at the locations of minimum width w1, w2 of the first and second baffle members 28, 30. The maximum second lateral spacing S' may be in the range 30mm to 200mm, optionally in the range 80mm to 160mm. A method of forming a casing 12 for receiving loose insulating material will be described hereafter. An inner shell 22 and an outer shell 24 of flexible sheet material are provided. A baffle arrangement 26 having first and second baffle members 28, 30 of flexible sheet material is also provided. The baffle arrangement 26 may also include a baffle end wall 31 formed of flexible sheet material. The first and second baffle members 28, 30 may be formed from a roll of flexible sheet material, cut at a desired height to provide the first and second baffle members 28, 30. The baffle end wall 31 may also be cut form the roll of flexible sheet material.

A baffle outer edge 42 of the first baffle member 28 is connected to the outer shell 24 at an outer connection region 46. An inner baffle edge 34 of the first baffle member 28 is connected to the inner shell 22 at an inner connection region 38. The inner and outer connection regions 38, 46 are non-linear and follow an inverse path from the outer connection region. The inner baffle edge 34 and the outer baffle edge 42 are sewn together to form the inner and outer connection regions 38, 46. As such, the first baffle member 28 is connected to the inner and outer shells 22, 24 at the inner and outer connection regions 38, 46.

A baffle outer edge 44 of the second baffle member 30 is connected to the inner shell 22 at an inner connection region 40. A baffle inner edge 36 of the second baffle member 30 is connected to the inner shell 22 at an inner connection region 40. The second baffle member 30 is connected to the inner and outer shells 22, 24 laterally spaced apart from the first baffle member 28 such that a chamber 32 is defined between the first and second baffle members 28, 30, inner shell 22 and outer shell 24 for receiving the loose insulating material. The inner baffle edge 36 and the outer baffle edge 44 are sewn together to form the inner and outer connection regions 40, 48. As such, the second baffle member 30 is connected to the inner and outer shells 22, 24 at the inner and outer connection regions 40, 48.

Each of the plurality of first and second baffle members 28, 30 are connected to the inner and outer shells 22, 24 in substantially the same way.

The baffle end wall 31 is connected to the first ends 28a, 30a of the first and second baffle members 28. In particular, the baffle end wall 31 is sewn to the first ends 28a, 30a. It shall be appreciated that the baffle end wall 31 may be continuous baffle end wall 31, or may be formed from a plurality of sections forming the baffle end wall 31. As such, the first and second baffle members 28 are sewn shut at the first ends 28a, 28b, and open at the second ends 28b, 30b. The chambers 32 may then be filled with insulating material, for example down and/or synthetic fibre, via the open second ends 28b, 30b of the first and second baffle members 28, 30. Once the chambers 32 have been filled with insulating material, the second ends 28b, 30b are connected to the baffle end wall 32 to close the chambers 32.

Once the casing 12 has been filled with insulating material, the inner and outer shells 22, 24 are connected together, for example sewn together, along the perimeter 19 thereof.

In an alternative embodiment, the baffle end wall 31 is connected to the first and second ends 28a, 30a, 28b, 30b of the first and second baffle member 28, 30 prior to filling occurring. In such embodiments, a hole or opening (not shown) is provided between the baffle end wall 31 and the first or second baffle member 28, 30 for filling the casing 12. It shall be appreciated that an opening is provided into each baffle chamber 32 so that said baffle chamber 32 may be filled. The chambers 32 are filled with insulating material, for example down and/or synthetic fibre, via the hole or opening in each baffle chamber 32.

It shall be appreciated that in alternative embodiments, the casing 12 may be used for an alternative sleeping article or an insulated garment. By way of example, the sleeping article may be a sleeping mat and the insulated garment may be a jacket.

In embodiments where the sleeping article is a sleeping mat. The inner shell and/or outer shell may each be formed from a flexible textile sheet material, for example a nylon or polyester material, and/or a flexible and air permeable plastics sheet material, e.g. a thermoplastic urethane (TPU) material. The flexible textile sheet material may be an outermost layer of the inner and/or outer shell, and the plastics sheet material may be an innermost layer of the inner and/or outer shell. The baffles may be formed from the same material as the inner and outer shells, for example from a nylon, polyester or plastics sheet material. The baffles may be connected to the inner and outer shells using ultrasonic welding, heat sealing, an adhesive or stitching. It shall be appreciated that in alternative embodiments, the inner and outer shells and baffle arrangement may be manufactured from any suitable material known in the art.

In embodiments where the casing 12 is used for an insulated garment. It shall be appreciated that the materials used for the insulated garment, for example the jacket, may be similar to those described in relation to the sleeping bag 10.

Although the teachings have been described above with reference to one or more preferred embodiments, it will be appreciated that various changes or modifications may be made without departing from the scope as defined in the appended claims.

## Claims

1. A casing for receiving a loose insulating material, the casing comprising:
an inner shell of flexible sheet material;
an outer shell of flexible sheet material; and
a baffle arrangement located between and connecting the inner and outer shells and comprising adjacent first and second elongate baffle members of flexible sheet material laterally spaced along the inner and outer shells, the first and second baffle members, inner shell and outer shell defining one or more chamber for receiving the insulating material,
wherein the first baffle member and the second baffle member are connected to the outer shell along a respective baffle outer edge at an outer connection region and to the inner shell along a respective baffle inner edge at an opposing inner connection region,
the opposing inner and outer connection regions of the first baffle member being non-linear and following an inverse path from one another in plan view.

2. The casing of claim 1, wherein the opposing inner and outer connection regions of the second baffle member are non-linear and follow an inverse path from one another, optionally wherein the second baffle further follows an inverse path to the corresponding inner and outer connection regions of the first baffle member.

3. The casing according to any preceding claim, wherein the non-linear inner and/or outer connection region of the first baffle member comprises a deviation in profile in plan view, optionally wherein the deviation in profile of the first baffle member is a substantially zig-zagged deviation in profile in plan view, or optionally wherein the deviation is profile of the first baffle member is a substantially curved, oscillating or sinusoidal deviation in profile in plan view.

4. The casing according to any preceding claim, wherein the non-linear inner and outer connection regions of the first baffle member intersect at least once in plan view, optionally wherein the inner and outer connections regions of the first baffle member intersect at least twice in plan view.

5. The casing according to any preceding claim, wherein the first baffle member extends along a longitudinal axis thereof, and wherein the first baffle member twists about said longitudinal axis to define the inverse path of the inner and outer connection regions, optionally wherein the first baffle member twists about the longitudinal axis in a first rotational direction from a first end of the first baffle member towards a location intermediate the first and an opposing second end of the first baffle member, and in an opposing second rotational direction from the location intermediate the first and second end of the first baffle member towards the second end of the first baffle member to define the non-linear inner and outer connection regions, optionally to define substantially zig-zigged inner and outer connection regions.

6. The casing according to claim 5, wherein the location intermediate the first and second end of the first baffle member is located equidistant the first and second ends of the first baffle member, and/or optionally wherein the first baffle member is formed from a fabric sheet material twisted to form the inner and outer connection regions.

7. The casing according to any preceding claim, wherein the first baffle member defines a width extending laterally between the inner and outer connection regions, and wherein the width of the first baffle member along a longitudinal axis thereof decreases from a first end of the first baffle member in a direction towards an opposing second end of the first baffle member to define a first minimum width at a location between the first end and the second end, optionally closer to the first end than the second end, and/or wherein the width of the first baffle member along the longitudinal axis decreases from the second end of the first baffle member in a direction towards the opposing first end of the first baffle member to define a second minimum width at a location between the first end and the second end, optionally closer to the second end than the first end, optionally wherein the width of the first baffle member along the longitudinal axis thereof increases from the first and/or second minimum width in a direction towards a centre point between the opposing first and second ends of the first baffle member, optionally wherein a maximum width of the first baffle member is located at or towards the centre point.

8. The casing according to any preceding claim, wherein the inner and outer connection regions of the first baffle member are substantially symmetrical about a longitudinal axis of the first baffle member in plan view, optionally wherein the first baffle member is substantially symmetrical about a longitudinal plane of symmetry extending parallel to the longitudinal axis of the first baffle member and between the inner and outer shells.

9. The casing according to any preceding claim, wherein the first baffle member defines a lateral axis extending perpendicular to a longitudinal axis of the first baffle member between the inner and outer connection regions, and wherein the inner and outer connection regions are each substantially symmetrical about said lateral axis in plan view, optionally wherein the first baffle member is substantially symmetrical about a lateral plane of symmetry extending parallel to the lateral axis of the first baffle member and between the inner and outer shells.

10. The casing according to any preceding claim, wherein a maximum width of the first baffle member along a lateral axis of the first baffle member extending between the inner and outer connection regions is in the range 30mm to 140mm, optionally in the range 40mm to 120mm, optionally in the range 60mm to 100mm, for example approximately 80mm, and/or optionally wherein a height of the first baffle member along a transverse axis of the first baffle member is in the range 1cm to 10cm, optionally in the range 2cm to 5cm.

11. The casing according to any preceding claim, wherein the baffle arrangement comprises a plurality of first and second baffle members arranged in pairs of first and second baffle members, and wherein the first and second baffle members in each pair are substantially symmetrical about a plane of symmetry extending parallel to a longitudinal axis of each baffle member, optionally wherein the baffle arrangement comprises a repeating pattern of pairs of first and second baffle members laterally spaced apart from one another.

12. The casing according to any preceding claim, wherein the baffle arrangement comprises a baffle end wall closing at least one side of the casing, and wherein each of the first and second baffle members is connected to the baffle end wall at a first and/or second end thereof, optionally wherein the first and/or second ends of the first baffle member connected to the baffle end wall are angled with respect to a transverse axis of the first baffle member extending perpendicularly between the inner and outer shells.

13. The casing according to any preceding claim, wherein the inner connection region and the outer connection region are inner and outer seams connecting the inner and outer shells to the baffle inner and outer edges of first and/or second baffle member, optionally wherein the inner and outer seams are stitched seams connecting the inner and outer shells to the baffle inner and outer edges of the first and/or second baffle member.

14. An insulated garment or sleeping article formed from the casing of any preceding claim, comprising:
an insulating material located between the inner and outer shells, wherein the insulating material is received in one or more chamber defined by the first and second baffles members, optionally wherein the insulating material comprises down and/or a synthetic fibre.

15. A method of forming a casing for receiving a loose insulating material, the method comprising:
providing an inner shell and an outer shell of flexible sheet material;
providing a baffle arrangement comprising first and second baffle members of flexible sheet material;
connecting an outer baffle edge of the first baffle member to the outer shell at an outer connection region, said outer connection region being non-linear;
connecting an inner baffle edge of the first baffle member to the inner shell at an inner connection region, said inner connection region being non-linear and following an inverse path from the outer connection region; and
connecting an outer baffle edge of the second baffle member to the outer shell at an outer connection region and connecting an inner baffle edge of the second baffle member to the inner shell at an inner connection region such that a chamber is defined between the first and second baffle members, inner shell and outer shell for receiving the loose insulating material.
